**Europäisches Patentamt**

**European Patent Office**

**Office européen des brevets**

(19)

(11) Veröffentlichungsnummer: **0 205 864**

**A2**

(12) # EUROPÄISCHE PATENTANMELDUNG

(21) Anmeldenummer: **86106364.2**

(22) Anmeldetag: **09.05.86**

(51) Int. Cl.⁴: **B23K 9/28**

(30) Priorität: **13.05.85 DE 3517184**

(43) Veröffentlichungstag der Anmeldung:
**30.12.86 Patentblatt 86/52**

(84) Benannte Vertragsstaaten:
**AT BE CH DE FR GB IT LI LU NL SE**

(71) Anmelder: **Adam, Alois**
**Kelterstrasse 17**
**D-7311 Dettingen/Teck(DE)**

(72) Erfinder: **Adam, Alois**
**Kelterstrasse 17**
**D-7311 Dettingen/Teck(DE)**

(74) Vertreter: **Reimold, Otto, Dr. Dipl.-Phys. et al**
**Patentanwälte Dipl.-Ing. R. Magenbauer**
**Dipl.-Phys. Dr. O. Reimold Dipl.-Phys.Dr. H.**
**Vetter Hölderlinweg 58**
**D-7300 Esslingen(DE)**

(54) **Spannzange zum Halten einer stabförmigen Schweisselektrode beim Schweissen.**

(57) Es handelt sich um eine Spannzange zum Halten einer stabförmigen Schweißelektrode beim Schweißen. Sie besitzt einen feststehenden Klemmbacken (1) und einen entgegen einer Federkraft verschwenkbaren Klemmbacken (5). Letzterer ist mit seinem Klemmende (10) in seiner Schließstellung auf das Klemmende (11) des feststehenden Klemmbackens (1) hin und in seiner Offenstellung von diesem weg geschwenkt. Weiterhin ist der verschwenkbare Klemmbacken (5) über mindestens einen Teil seiner Länge von einer Blattfeder (14) gebildet, die mit ihrem dem Klemmende (10) entgegengesetzten Ende (6) festgelegt ist. Sie ist in die Offenstellung vorgespannt. Im Bereich zwischen dem Befestigungsende (6) der Blattfeder (14) und dem Klemmende (10) des verschwenkbaren Klemmbackens (5) greift an der dem feststehenden Klemmbacken (5) entgegengesetzten Seite der Blattfeder (14) ein Druckstück (33) an. Dieses ist zwischen einer den verschwenkbaren Klemmbacken (5) in seiner Schließtellung haltenden, wirksamen Stellung und einer unwirksamen Stellung verstellbar.

Fig. 1

EP 0 205 864 A2

## Spannzange zum Halten einer stabförmigen Schweißelektrode beim Schweißen

Die Erfindung betrifft eine Spannzange zum Halten einer stabförmigen Schweißelektrode beim Schweißen, mit einem feststehenden Klemmbacken und einem entgegen einer Federkraft verschwenkbaren Klemmbacken, der mit seinem Klemmende in seiner Schließstellung auf das Klemmende das feststehenden Klemmbackens hin und in seiner Offenstellung von diesem weg geschwenkt ist.

Bei einer bekannten Spannzange ist an den verschwenkbaren Klemmbacken im Bereich ihrer Schwenkachse ein Betätigungshebel angebracht, der in von den Klemmenden wegweisende Richtung unter einem Winkel von dem verschwenkbaren Klemmbacken absteht. Zwischen dem Betätigungshebel und dem ebenfalls verlängerten feststehenden Klemmbacken stützt sich eine Druckfeder ab. Die Druckfeder drückt den Betätigungshebel nach außen und spannt somit den verschwenkbaren Klemmbacken in seine Schließstellung vor, in der zwischen den Klemmenden eine stabförmige Schweißelektrode spannbar ist. Um den verschwenkbaren Klemmbacken in seine Offenstellung zu verbringen, wird der Betätigungshebel entgegen der Federkraft der Druckfeder verschwenkt, was gleichzeitig ein Verschwenken des verschwenkbaren Klemmbackens bewirkt, so daß die Klemmenden der beiden Klemmbacken auseinanderklaffen und das Einsetzen einer Schweißelektrode ermöglichen. Um die zum Verbringen des schwenkbaren Klemmbackens in seine Offenstellung erforderliche Betätigunskraft auf einem erträglichen Maß zu halten, darf die Federkonstante der Druckfeder nicht zu groß gewählt werden. Dies hat aber zur Folge, daß auch die von den Klemmenden auf de gespannte Schweißelektrode ausgeübte Klemmkraft relativ gering ist. Dadurch wird die Elektrode nur ungenügend festgehalten, und vor allem beim Anschlagen der Elektrode am zu schweißenden Material zur Initiierung des Lichtbogens rutscht die Elektrode leicht aus ihrer Halterung an der Spannzange heraus.

Der vorliegenden Erfindung liegt die Aufgabe zugrunde, eine Spannzange der eingangs genannten Art zu schaffen, die den oben genannten Nachteilen abhilft und die Klemmkraft der Klemmbacken in der Schließstellung wesentlich erhöht. Gleichzeitig soll die zum Verschwenken des verschwenkbaren Klemmbackens notwendige Betätigungskraft gering sein.

Die obige Aufgabe wird dadurch gelöst, daß der verschwenkbare Klemmbacken über mindestens einen Teil seiner Länge von einer Blattfeder gebildet ist, die mit ihrem dem Klemmende entgegengesetzten Ende festgelegt ist und in Richtung vom feststehenden Klemmbacken weg vorgespannt ist, wobei im Bereich zwischen dem Befestigungsende, der Blattfeder und dem Klemmende des verschwenkbaren Klemmbackens an der dem feststehenden Backen entgegengesetzten Seite der Blattfeder ein zwischen einer den verschwenkbaren Klemmbacken in seiner Schließstellung haltenden, wirksamen Stellung und einer unwirksamen Stellung verstellbaren Druckstück angreift.

Da der verschwenkbare Klemmbacken selbst federnde Eigenschaften besitzt, kann auf die Verwendung einer separaten Druckfeder verzichtet werden. Die Blattfeder selbst bildet praktisch den Klemmbacken, so daß eine kostensparende Verringerung von Bauteilen möglich ist, die zudem die Montagezeit beim Zusammenbau der erfindungsgemäßen Spannzange reduziert. Weiterhin ist bei der erfindungsgemäßen Spannzange die von den Klemmenden ausgeübte Klemmkraft beträchtlich erhöht. Dies vor allem deshalb, weil der verschwenkbare Klemmbacken in seine Offenstellung federnd vorgespannt ist, während er in seiner Schließstellung von einem nicht federnden Druckstück im westenlichen unnachgiebig verrigelt ist. Die Ausbildung der Blattfeder dient weniger zum Erzeugen der Klemmkraft als vielmehr zur nachgiebigen Anpassung der Spannzange an unterschiedlich dicke, zu haltemde Schweißelektroden und zur Rückstellung des verschwenkbaren Klemmbackens in seine Offenstellung.

Vorteilhafte Weiterbildungen der erfindungsgemäßen Spannzange sind in den Unteransprüchen aufgeführt.

Die Weiterbildung nach Anspruch 2 besitzt einen einfachen und besonders kostengünstig herstellbaren, verschwenkbaren Klemmbacken.

Mit den Weiterbildungen der Ansprüche 3 und 4 kann die Betätigungskraft zum Verstellen des verstellbaren Klemmbackens zwischen seiner Offenstellung und seiner Schließstellung stark reduziert werden. Dies erhöht die Bedienungsfreundlichkeit der erfindungsgemäßen Spannzange.

Durch die Weiterbildungen der Ansprüche 5 und 6 wird die Reibung zwischen dem Druckstück und dem zu verschwenkenden Klemmbacken während der Schwenkbewegung gemindert, so daß einerseits die zum Verstellen des Druckstücks notwendige Betätigungskraft verringert wird und andererseits der Verschleiß des Druckstücks und des verschwenkbaren Klemmbackens reduziert wird.

Mit der Weiterbildung nach Anspruch 7 ist eine sichere Verriegelung des verschwenkbaren Klemmbackens in seiner Schließstellung gewährleistet, da der exzentrische Anschnitt bzw. die Druckrolle in der wirksamen Stellung des Druckstücks den Totpunkt des Exzenters etwas überschritten hat. Ein versehentliches Verstellen des Druckstücks in seine unwirksame Stellung ist ausgeschlossen; für dieses Verstellen ist eine gewisse Verstellkraft notwendig.

Bei anderen bekannten Spannzangen, die einen feststehenden Klemmbacken und einen verschwenkbaren Klemmbacken, der in seiner Schließstellung auf das Klemmende des feststehenden Klemmbackens hin und in seiner Offenstellung von diesem weg geschwenkt ist, besitzt und die mit mindestens einer an der zum verschwenkbaren Klemmbacken weisenden Seite des Klemmendes des feststehenden Klemmbackens angeordneten Elektroden-Aufnahmenut versehen ist, wurden ebenfalls Schwachpunkte bei der Halterung einer Schweißelektrode festgestellt. Derartige Spannzangen besitzen in der Regel mehrere, kreuzweise angeordnete Aufnahmenuten, die eine Halterung der Schweißelektrode nur in bestimmten Winkelstellungen bezüglich der Klemmbacken zulassen. Nun sind jedoch oftmals auch andere als die vorgegebenen Winkelstellungen wünschenswert, dies vor allem bei schwer zugänglichen, zu schweißenden Gegenständen.

Daher ist vorgesehen, gemäß dem kennzeichnenden Teil des Anspruchs 8 die Elektroden-Aufnahmenut an einem Drehstück anzubringen, das an dem feststehenden Klemmbacken bezüglich einer in etwa im rechten Winkel zur Schwenkachse des verschwenkbaren Klemmbackens angeordneten Drehachse drehbar gelagert ist. Somit kann die Aufnahmenut stufenlos verdreht und in jede gewünschte Winkellage verbracht werden. Das Verdrehen erfolgt zweckmäßigerweise dadurch, daß die in der Aufnahmenut fixierte Schweißelektrode in Drehrichtung unter Mitbewegung des Drehstückes verschwenkt wird.

Mit der Weiterbildung nach Anspruch 9 ist ein versehentliches Verdrehen des Drehstückes gegenüber dem es halternden Klemmbacken ausgeschlossen.

Die Weiterbildungen der Ansprüche 10 und 11 ermöglichen ein einfaches, ohne große Kraftaufwendungen durchführbares Verdrehen des Drehstückes, wobei gleichzeitig ein gewolltes Verdrehen desselben ausgeschlossen ist. Vorteilhafterweise wird in der Schließstellung des verschwenkbaren Klemmbackens durch diesen über die festzuspannende Schweißelektrode auf das Drehstück eine Druckkraft ausgeübt, die die Rastvertiefungen und Rasterhebungen bzw. die beiden Oberflächenverzahnungen gegeneinander pressen, so daß im festgespannten Zustand einer Schweißelektrode ein Verdrehen des Drehstückes praktisch unmöglich ist.

Durch die Weiterbildung nach Anspruch 13 wird eine Schweißelektrode in der Schließstellung des verschwenkbaren Klemmbackens sicher in der Aufnahmenut gehalten, so daß einem seitlichen Herausrutschen aus der Aufnahmenut vorgebeugt ist. Indem das Klemmstück in der Schließstellung des verschwenkbaren Klemmbackens mindestens teilweise in die Aufnahmenut eintaucht, ist sichergestellt, daß die Nutflanken der Aufnahmenut die einzuspannende Elektrode überragen, so daß eine ausgezeichnete Seitenführung der Elektrode gewährleistet ist.

Die Weiterbildungen der Ansprüche 14 bis 16 verhindern insbesondere ein Verkanten des Klemmstückes bei seinem Eintauchen in die Aufnahmenut. Auch ermöglichen diese Weiterbildungen eine kompakte Bauform der erfindungsgemäßen Spannzange, da das Druckstück sehr nahe am feststehenden Klemmbacken angeordnet werden kann.

Die Ansprüche 17 und 18 beschreiben eine Weiterbildung, die verhindert, daß das exzentrisch gelagerte Druckstück mit seinem exzenterabschnitt bzw. seiner Druckrolle in der wirksamen Stellung zu weit über den Totpunkt hinausbewegt wird, was zu einer Verringerung der Klemmkraft führen könnte.

Mit der Weiterbildung nach Anspruch 19 ist eine zwischen den Klemmenden eingespannte Stabelektrode zusätzlich gegen Herausrutschen aus der Aufnahmenut gesichert.

Nachfolgend wird die Erfindung anhand der beiliegenden Zeichnung näher erläutert. Dabei zeigen:

Fig. 1 eine Seitenansicht einer ersten Bauform der erfindungsgemäßen Spannzange, teilweise aufgebrochen und mit sich in Offenstellung befindlichem verschwenkbarem Klemmbacken,

Fig. 2 eine Draufsicht der Spannzange aus Fig. 1 in Schließstellung des verschwenkbaren Klemmbackens und mit weggebrochenem Klemmende desselben und

Fig. 3 einen Schnitt gemäß III-III durch das Klemmende des feststehenden Klemmbackens in Fig. 1.

Die in den Zeichnungen dargestellte Spannzange zum Halten einer stabförmigen Schweißelektrode beim Schweißen besitzt einen feststehenden Klemmbacken 1 mit im wesentlichen linearer Erstreckung. Er besitzt eine quaderförmige Gestalt und besteht aus einem elektrisch leitenden Material. Mit einem seiner stirnseitigen Enden 2 ist er an einer Anschlußhülse 3 angebracht, die ebenfalls aus einem elektrisch leitenden Material besteht und in der in stromführendes Anschlußkabel 4 lösbar festgelegt ist.

Weiterhin weist die Spannzange einen entgegen einer Federkraft verschwenkbaren Klemmbacken 5 auf, der einenends ein Befestigungsende 6 besitzt, mit dem er am stirnseitigen Ende 2 des feststehenden Klemmbackens 1 festgelegt ist. Die beiden Klemmbacken 1, 5 erstrecken sich in etwa über die gleiche Länge und liegen einander gegenüber. Zwischen das Befestigungsende 6 und das stirnseite Ende 2 ist eine die beiden Klemmbacken 1, 5 auf Abstand haltende Zwischenlage 7 angeordnet, die gleichzeitig einen an der Anschlußhülse 3 fest angebrachten befestigungsfortsatz bildet. Das Befestigungsende 6, der Befestigungsfortsatz 7 und der feststehende Klemmbacken 1 im Bereich seines stirnseitigen Endes 2 sind je mit einer Durchgangsbohrung versehen, die koaxial zueinander angeordnet sind und eine gemeinsame Montagebohrung 8 bilden, durch die zur lösbaren Verbindung der drei Bauteile 1, 3, 6 miteinander eine Montageschraube 9 von der Seite des Klemmbackens 5 her durchgeschraubt ist. Dadurch werden das Befestigungsende 6, der Befestigungsfortsatz 7 und das Ende 2 des feststehenden Klemmbackens 1 fest zusammengespannt.

Der verschwenkbare Klemmbacken 5 ist zwischen einer Schließstellung und einer Offenstellung verschwenkbar. In der Schließstellung ist er mit seinem dem Befestigungsende 6 entgegengesetzten Klemmende 10 auf das dem stirnseitigen Ende 2 entgegengesetzte Klemmende 11 des feststehenden Klemmbackens 1 hingeschwenkt und in seiner Offenstellung von diesem weggeschwenkt. In der Offenstellung kann zwischen die beiden Klemmenden 10, 11 eine bei 12 dargestellte Schweißelektrode zwischengefügt werden, die in der Schließstellung zwischen den Klemmenden festgespannt ist. Die Schwenkstelle des Klemmbackens 5 ist dem Befestigungsende 6 zugeordnet und bei 13 angedeutet.

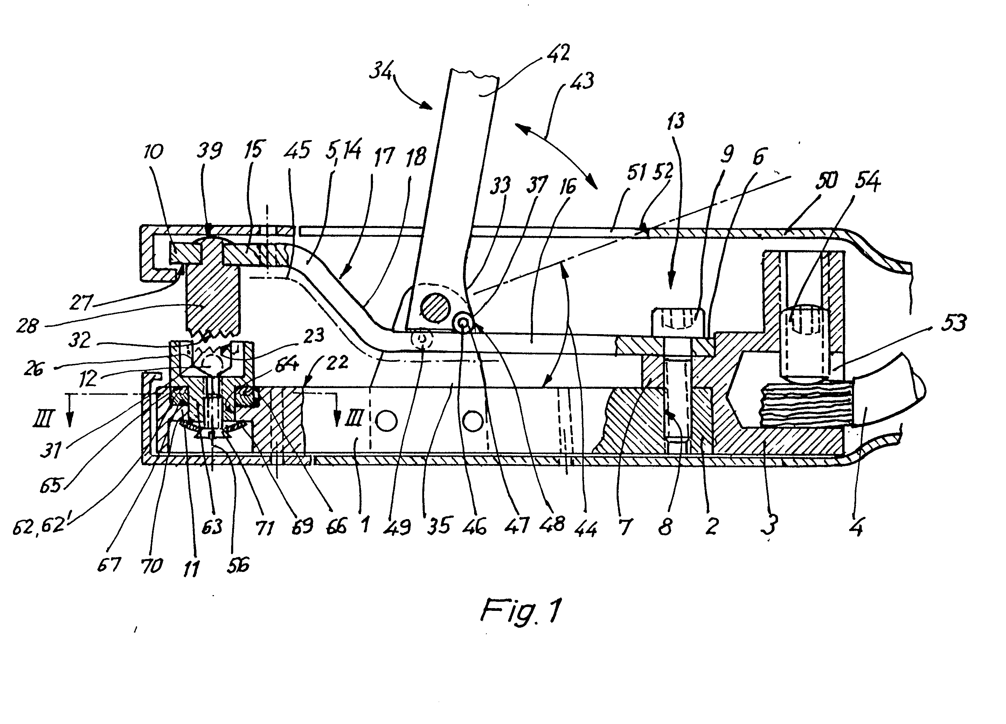

Der verschwenkbare Klemmbacken 5 ist als Blattfeder 14 ausgebildet, die in Richtung vom feststehenden Klemmbacken 1 weg in die Offenstellung vorgespannt ist. Sie ist in Seitenansicht gemäß Fig. 1 gesehen abgekröpft, so daß sie zwei in etwa parallel und im Abstand zueinander angeordnete Federschenkel 15, 16 aufweist, die im Bereich der Abkröpfstelle 17, die etwa dem Längsmittenbereich der Blattfedern zugeordnet ist, über einen schräg verlaufenden Federabschnitt 18 miteinander verbunden sind. Der freie Enderbereich des einen Federschenkels 15 bildet das Klemmende 10 und der freie Endbereich des anderen Federschenkels 16 das Befestigungsende 6. Der das Klemmende 10 tragende Federschenkel 15 ist dabei mit größerem Abstand zum feststehenden Klemmbacken 1 angeordnet als der das Befestigungsende 6 tragende Federschenkel 16, beide Schenkel 15, 16 verlaufen in etwa parallel zur Längsrichtung des feststehenden Klemmbackens 1.

An der zum verschwenkbaren Klemmbacken 5 weisenden Seite 22 des feststehenden Klemmbackens 1 ist eine Elektroden-Aufnahmenut 23 angeordnet, in die eine Schweißelektrode 12 mit ihrem festzuspannenden Ende 24 einlegbar ist. Diese stabilisiert das Ende 24 seitlich mit ihren Nutflanken 26. An der zur Elektroden-Aufnahmenut 23 weisenden Seite 27 des Klemmendes 10 des verschwenkbaren Klemmbackens 5 ist ein in Richtung zur Aufnahmenut 23 vorstehendes Klemmstück 28 angeordnet, das beim Ausführungsbeispiel durch einen Zapfen gebildet ist, der mit dem Klemmende 10 vernietet ist (bei 39). Das Klemmstück 28 klann beispielsweise auch als Schraubteil ausgebildet und mit dem Klemmende 10 lösbar verschraubt sein.

Die Aufnahmenut 23 ist in ihrem dem Klemmstück 28 unmittelbar gegenüberliegenden Bereich komplementär zum Klemmstück 28 ausgebildet, so daß dasselbe in der Schließstellung des verschwenkten Klemmbackens 5 teilweise in die Aufnahmenut 23 eintauchen kann. Dabei ist beim Ausführungsbeispiel vorgesehen, daß die Aufnahmenut 23 in ihrer Breite so auf das festzuspannende Ende 24 der Elektrode 12 abgestimmt ist, daß das Ende 24 mit Spiel in die Aufnahmenut 23 einsetzbar ist. Das Klemmstück 28 ist jedoch in seinen Querschnittsabmessungen größer als die Aufnahmenutbreite, so daß die Aufnahmenut 23 in dem Klemmstück 28 gegenüberliegenden Bereich erweitert ist. Zweckmäßigerweise besitzt das Klemmstück 28 einen zylindrischen und insbesondere kreiszylindrischen Querschnitt, entsprechend komplementär ist die Gestaltung der Erweiterung 29 der Aufnahmenut 23 ausgebildet.

Die Tiefe der Elektroden-Aufnahmenut 23 ist so gewählt, daß das festzuspannende Ende 24 einer Stabelektrode im in die Nut 23 eingesetzten Zustand vollständig in die Aufnahmenut 23 eintaucht und von den Nutflanken 26 überragt wird. Dadurch verfügt das festzuspannende Ende 24 über eine hervorragende Seitenführung, die auch bei einer starken, gemäß Pfeil 30 auf die Stabelektrode 12 einwirkenden Querbelastung ein Herausrutschen der Elektrode aus der Aufnahmenut verhindert. In Fig. 1 ist bei 31 nochmals gestrichelt das in der Schließstellung teilweise in die Aufnahmenut 23 eingetauchte Klemmstück 28 dargestellt. Wie dort weiterhin gut sichtbar ist, besitzt die dem feststehenden Klemmbacken 1 zugewandte Stirnseite 32 des Klemmstücks 28 eine aufgerauhte Oberfläche, vorzugsweise eine gerändelte Oberfläche.

Zur Bewegung des verschwenkbaren Klemmbackens 5 zwischen seiner Offenstellung und seiner Schließstellung ist die Spannzange mit einem Druckstück 33 versehen, das im Bereich zwischen dem Befestigungsende 6 und dem Klemmende 10 des verschwenkbaren Klemmbackens 5 an dessen dem feststehenden Backen entgegengesetzten Seite angreift. Das Druckstück ist zwischen einer den verschwenkbaren Klemmbacken 5 in seiner Schließstellung haltenden, wirksamen Stellung und einer unwirksamen Stellung, in der sich der verschwenkbare Klemmbacken in seiner Offenstellung befindet, verstellbar. Gemäß Fig. 1 ist das Druckstück vorzugsweise zwischen der Abkröpfstelle 17 und dem Befestigungsende 6 angeordnet, da hier die Abstände der beiden Klemmbacken relativ gering sind und somit kompakte Querabmessungen der Spannzange realisierbar sind.

Das Druckstück 33 ist als Exzenterhebel 34 ausgebildet, der an einer mit dem feststehenden Klemmbacken 1 verbundenen und in etwa im rechten Winkel zur Schwenkebene des verschwenkbaren Klemmbackens 5 verlaufenden Lagerachse 34 um diese exzentrisch verschwenkbar gelagert ist. Diese ist ebenfalls der vom Klemmbacken 1 abgewandten Seiten des verschwenkbaren Klemmbackens 5 zugeordnet und verläuft in Draufsicht gesehen quer zur Längsrichtung 25 der beiden Klemmbacken 1, 5. Beidendig ist die Lagerachse 34 jeweils an einem Lagerflügel 35 gehalten, die seitlich an dem verschwenkbaren Klemmbacken 5 vorbeigeführt und ebenfalls seitlich an dem feststehenden Klemmbacken 1 befestigt ist. Die Befestigung erfolgt mittels Nieten 36 oder Schrauben.

Durch seine exzentrische Lagerung besitzt das Druckstück 33 einen exzentrischen Abschnitt 37, der je nach Winkelstellung des Druckstücks bezüglich der Lagerachse 38 mehr oder weniger weit in Richtung auf den feststehenden Klemmbacken 1 zu verlagert ist. Dabei ist der exzentrische Abschnitt 37 in der unwirksamen Stellung des Druckstücks 33 von der Lagerachse 38 aus gesehen zum Befestigungsende 6 hin gerichtet, während er in der wirksamen Stellung zu den beiden Klemmbacken 1, 2 hin weist. Zweckmäßigerweise hat der exzentrische Abschnitt 37 in der wirksamen Stellung den Totpunkt der Exzenterbewegung leicht überschritten und befindet sich auf der zum Klemmende 10 weisenden Seite einer durch den Drehpunkt der Lagerachse 38 verlaufenden gedanklichen Linie, die zudem rechtwinklig zu dem Federschenkel 16 ausgerichtet ist. Diese Konstruktion schließt aus, daß das Druckstück aus seiner wirksamen unbeabsichtigt in die unwirksame Stellung zurückkehren kann.

Das Druckstück 33 ist zur Verringerung der Betätigungskraft beim Verschwenken zwischen seiner wirksamen und seiner unwirksamen Stellung mit einem in von dem verschwenkbaren Klemmbacken 5 wegweisende Richtung abstehenden Schwenkhebel 42 versehen, der gemäß Pfeil 43 verschwenkbar ist. In der unwirksamen Stellung des Druckstücks 33 steht der Schwenkhebel 42 in etwa quer zu den beiden Klemmbacken 1, 5 ab, während er in der wirksamen Stellung in Richtung zum Befestigungsende 6 verschwenkt ist - (strichpunktiert dargestellt) und mit dem feststehenden Klemmbacken 1 einen spitzen Winkel 44 einschließt. Die mit der wirksamen Stellung des Druckstücks 33 zusammenfallende Schließstellung des verschwenkbaren Klemmbackens 5 ist strichpunktiert bei 41 angedeutet.

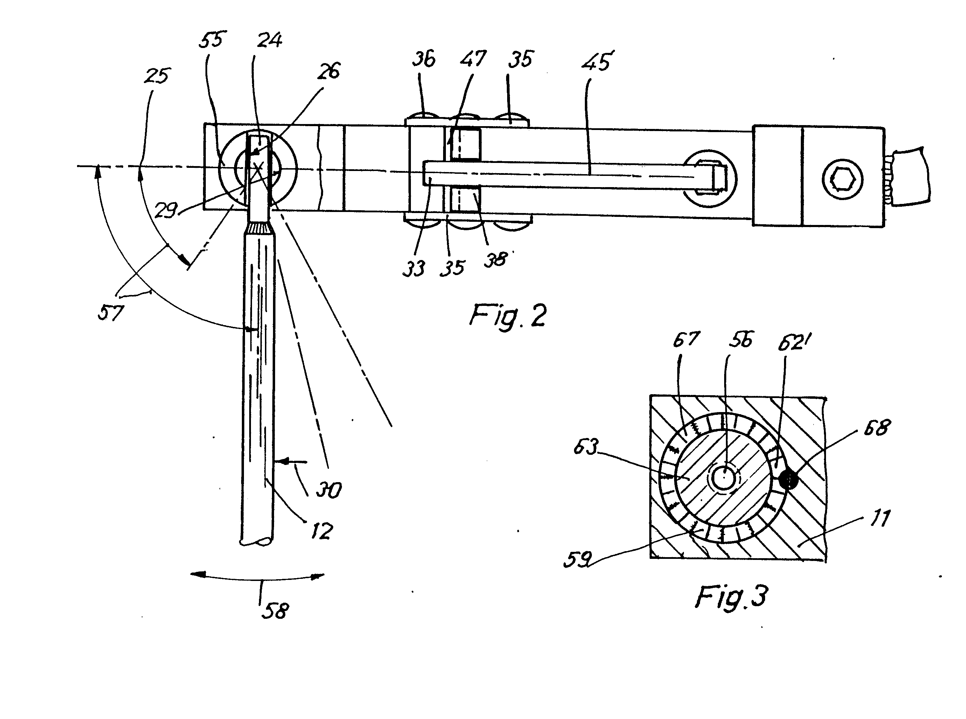

Gemäß Fig. 2 fällt in Draufsicht gesehen die radiale Mittelebene 45 des Druckstücks 33 mit der Längsachse 25 des feststehenden Klemmbackens 1 zusammen, gleichzeitig sind die Breitenabmessungen des Druckstücks geringer als diejenigen der Klemmbacken. Zur Verringerung des Verschließes zwischen dem exzentrischen Abschnitt 37 und dem verschwenkbaren Klemmbacken 5 sowie zur Verringerung der Betätigungskraft für das Druckstück sind an dem exzentrischen Abschnitt zwei an einer parallel zur Lagerachse 38 und mit Abstand zu dieser angeordneten Drehachse 46 drehbar gelagerte Druckrollen 47 angebracht. Diese befinden sich in Draufsicht gesehen beidseits des Druckstücks 33. Die Mantelfläche 48 der Druckrollen 47 überragt die Andrückfläche des exzentrischen Abschnitts 37 um einen kleinen Betrag, so daß die Druckkdraft des Druckstücks 33 durch die Mantelfläche 48 auf den verschwenkbaren Klemmbacken 5 übertragen wird. Bei 49 ist in Fig. 1 gestrichelt die Lage der Druckrollen 47 in der wirksamen Stellung des Druckstücks 33 angedeutet.

An dieser Stelle sei nachgetragen, daß der verschwenkbare Klemmbacken 5 ersichtlich nicht vollständig von einer Blattfeder gebildet sein muß; es genügt, den Klemmbacken 5 über einen Teil seiner Länge als Blattfeder auszubilden.

Die Anschlußhülse 3 und die beiden Klemmbacken 1,5 sind zumindest teilweise von einer Isolierabdeckung 50 umgeben, die die Bedienperson der Spannzange vor elektrischen Schlägen schützt. Dabei ist die Isolierabdeckung 50 im Bereich des Schwenkweges des Schwenkhebels 42 geschlitzt - (bei 51), und zwar in dem Maße, daß das Schlitzende 52 einen Anschlag für den Schwenkhebel 42 in der wirksamen Stellung des Druckstücks 33 bildet. Dies ist zweckmäßig, um zu verhindern, daß der exzentrische Abschnitt in der wirksamen Stellung zu weit über den Totpunkt der Exzenterbewegung hinausgelangt, was eine Verminderung der Klemmkraft zur Folge haben könnte.

Die Anschlußhülse 3 ist bekannterweise mit einer Einsteckbohrung 53 versehen, in die das Anschlußkabel 4 eingesteckt und mittels einer in der Anschlußhülse quer zur Längsrichtung der Einsteckbohrung vorschraubbaren Stellschraube 54 festlegbar ist.

Bei unterschiedlichen Einsatzbedingungen, beispielsweise beim Überkopfschweißen, beim Schweißen einer Fallnaht od. dgl., ist es vorteilhaft, wenn die Schweißelektrode in verschiedenen Ausrichtungen bezüglich der Längsachse 25 der Spannzange an dieser festlegbar ist. Deshalb ist die Elektroden-Aufnahmenut 23 an einem Drehstück 55 angebracht, das an dem feststehenden Klemmbacken 1 drehbar gelagert ist. Die Drehachse 56 des Drehstücks verläuft dabei in etwa rechtwinklig zur Längsachse 25 und zur Längsrichtung der Aufnahmenut 23 sowie parallel zur Schwenkebene des Klemmbackens 5. Die Aufnahmenut 23 ist also bezüglich der Drehachse 56 in Pfeilrichtung 58 drehbar angeordnet und in beliebige Winkelstellungen bezüglich der Längsachse 25 ausrichtbar. Eine Auswahl der Winkelstellungen ist bei 57 dargestellt. Die Lagerung des Drehstücks 55 an dem feststehenden Klemmbacken 1 erfolgt über einen an dem Drehstück koaxial zu seiner Drehachse 56 angeordneten kreiszylindrischen Drehzapfen 63, der in einer komplementären, den feststehenden Klemmbacken 1 durchquerenden Ausnehmung 64 verdrehbar gelagert ist.

Um ein unbeabsichtigtes Verdrehen des Drehstücks 55 zu vermeiden, ist dasselbe in einzelnen Drehwinkelstellungen 57 der Aufnahmenut 23 gegenüber dem feststehenden Klemmbacken 1 lösbar verrastbar. Zu diesem Zwecke ist an der zum feststehenden Klemmbacken 1 weisenden Stirnseite des Drehstücks 55 und an der gegenüberliegenden Fläche des Klemmbackens 1 jeweils eine Oberflächenverzahnung 62, 62' angeordnet, welche Verzahnungen komplementär zueinander ausgebildet sind und die federbelastet ineinander eingreifen. Gemäß Fig. 1 ist die dem Drehstück 55 zugeordnete Oberflächenverzahnung 62 an einer Ringscheibe 65 angeformt, die koaxial und unverdrehbar auf den Drehzapfen 63 aufgezogen ist. Zweckmäßigerweise ist die Ringscheibe 65 mit dem Drehstück 55 verklebt oder verlötet od.dgl. An gegenüberliegender Stelle besitzt die Ausnehmung 64 eine zylindrische Erweiterung 66, in der ebenfalls verdrehfest eine zweite Ringscheibe 67 einsitzt, die die zweite Oberflächenverzahnung 62 trägt. Gemäß Fig. 3 sind die Zahnflanken 59 radial mit Bezug zur Drehachse 56 ausgerichtet. Die verdrehfeste Halterung der zweiten Richscheibe 67 gegenüber dem Klemmbacken 1 erfolgt über einen Sicherungsstift 68.

Das Drehstück 55 ist gegen den Klemmbacken 1 federbelastet vorgestpannt, so daß gleichzeitig auch die beiden Oberflächenverzahnungen 62, 62' federnd ineinander eingreifen. Die Federkraft liefert eine Tellerfeder 69, die sich auf der vom Drehstück 55 wegweisenden Seite des Klemmbackens 1 zwischen dem Drehzapfen 63 und dem Klemmbacken 1 abstützt. Die Tellerfeder 69 ist koaxial zur Drehachse 56 angeordnet und liegt mit ihrem der Federöffnung zugeordneten Rand 70 am Klemmbacken 1 an. Die Federwölbung weist vom Klemmbacken 1 weg. Weiterhin besitzt die Tellerfeder eine konzentrische Bohrung, durch die eine Spannschraube 71 hindurchgesteckt ist, die in eine entsprechende Gewindebohrung des Drehzapfens 63 eingeschraubt ist. Die Tellerfeder spannt den Drehzapfen 63 unter Vermittlung der Spannschraube 71 in vom verschwenkbaren Klemmbacken 5 wegweisende Richtung vor.

Wird eine Verdrehung der Aufnahmenut 23 gewünscht, so wird einfacherweise die Schweißelektrode in der Offenstellung des Klemmbackens 5 in die Aufnahmenut 23 eingelegt und unter Ausübung einer gemäß Pfeilrichtung 30 oder entgegengesetzt wirkenden Druckkraft verdreht. Bei der Verdrehung führt das Drehstück 55 betragsmäßig kleine Axialbewegungen aus, die ein Abgleiten der Oberflächenverzahnungen 62, 62' aneinander erlauben.

Selbstverständlich müssen die Rastelemente nicht notwendigerweise als Oberflächenverzahnungen ausgebildet sein, es wäre auch möglich, komplementär zueinander ausgebildete Rastvertiefungen und Rasterhebungen, z. B. Bohrungen und Noppen, zu verwenden.

Mit der erfindungsgemäßen Spannzange läßt sich also auf einfache Weise die Elektrodenausrichtung variieren. Gleichwohl ist aber auch sichergestellt, daß ein unbeabsichtigtes Verdrehen der Aufnahmenut 23 ausgeschlossen ist. Denn in der Schließstellung des Klemmbackens 5 übt dieser über das Klemmstück 28 und die festgeklemmte Schweißelektrode 12 eine Druckkraft auf das Drehstück 55 aus, die die beiden Oberflächenverzahnungen 62, 62' fest ineinanderpreßt, so daß eine Verdrehung des Drehstücks 55 nicht mehr möglich ist.

Vorteilhafterweise ist die erfindungsgemäße Spannzange zum Klemmen von Schweißelektroden verschiedener Dicke geeignet, da die Blattfeder 14 einen federelastischen Dickenausgleich vornehmen kann. Die hohe Klemmkraft der erfindungsgemäßen Spannzange wird vor allem durch die auf den verschwenkbaren Klemmbacken seitens des Druckstücks 33 ausgeübte starre Verriegelung erzielt; in der Schließstellung ist der die Klemmkraft liefernde maßgebliche Hebelarm auf die sich zwischen dem Klemmende 10 und dem Angriffspunkt des Druckstücks 33 erstreckende Länge reduziert.

Es sei noch nachzutragen, daß die Aufnahmenut 23 vorzugsweise einen prismatischen Nutgrund aufweist, so daß die Schweßelektrode im festgespannten Zustand unverrückbar zentriert ist. Das Drehstück selbst ist vorzugsweise tellerförmig ausgebildet, dessen Tellerwand an zwei gegenüberliegenden Stellen zur Erzeugung der Aufnahmenut durchbrochen ist.

**Ansprüche**

1. Spannzange zum Halten einer stabförmigen Schweißelektrode beim Schweißen, mit einem feststehenden Klemmbacken und einem entgegen einer Federkraft verschwenkbaren Klemmbacken, der mit seinem Klemmende in seiner Schließstellung auf das Klemmende des feststehenden Klemmbackens hin und in seiner Offenstellung von diesem weggeschwenkt ist, dadurch gekennzeichnet , daß der verschwenkbare Klemmbacken (5) über mindestens einen Teil seiner Länge von einer Blattfeder - (14) gebildet ist, die mit ihrem dem Klemmende - (10) entgegengesetzten Ende (6) festgelegt ist und in Richtung vom feststehenden Klemmbacken (1) weg vorgespannt ist, wobei im Bereich zwischen dem Befestigungsende (6) der Blattfeder (14) und dem Klemmende (10) des verschwenkbaren Klemmbackens (5) an der dem feststehenden Backen (1) entgegenge$etzten Seite der Blattfeder - (14) ein zwischen einer den verschwenkbaren Klemmbacken (5) in seiner Schließstellung haltenden, wirksamen Stellung und einer unwirksamen Stellung verstellbares Druckstück (33) angreift.

2. Spannzange nach Anspruch 1, dadurch gekennzeichnet, daß der verschwenkbare Klemmbacken (5) eine Blattfeder (14) ist.

3. Spannzange nach Anspruch 1 oder 2, dadurch gekennzeichnet, daß das Druckstück (33) an einer mit dem feststehenden Klemmbacken (1) verbundenen und in etwa im rechten Winkel zur Schwenkebene des verschwenkbaren Klemmbackens (5) verlaufenden Lagerachse (38) um diese exzentrisch verschwenkbar gelagert ist, welche Lagerachse (38) auf der dem feststehenden Klemmbacken (1) entgegengesetzten Seite des verschwenkbaren Klemmbackens (5) angeordnet ist, wobei das Druckstück (33) insbesondere einen in Richtung von dem verschwenkbaren Klemmbacken (5) weg abstehenden Schwenkhebel (42) besitzt.

4. Spannzange nach Anspruch 3, dadurch gekennzeichnet, daß an dem Druckstück (33) mindestens eine an einer parallel zur Lagerachse (38) und mit Abstand zu dieser angeordneten Drehachse (46) drehbar gelagerte Druckrolle (47) angebracht ist, die mindestens in der wirksamen Stellung des Druckstücks (33) auf die von dem feststehenden Klemmbacken (1) abgewandte Seite des verschwenkbaren Klemmbackens (5) drückt, wobei der Abstand zwischen der mindestens einen Druckrolle (47) und dem feststehenden Klemmbacken - (1) in der wirksamen Stellung des Druckstücks - (33) geringer ist als in der unwirksamen Stellung.

5. Spannzange nach Anspruch 3 oder 4, dadurch gekennzeichnet, daß sich der exzentrische Abschnitt (37) des Druckstücks (33) bzw. die mindestens eine Druckrolle (47) in der unwirksamen Stellung des Druckstücks (33) im Bereich der dem Befestigungsende (6) zugewandten Seite der Lagerachse (38) des Druckstücks (33) befindet und in der wirksamen Stellung in etwa zwischen der Lagerachse (38) und dem verschwenkbaren Klemmbacken (5) bzw. in geringem Abstand zu dieser Position im Bereich der dem Klemmende (10) zugewandten Seite der Lagerachse (38) angeordnet ist.

6. Spannzange zum Halten einer stabförmigen Schweißelektrode beim Schweißen, mit einem feststehenden Klemmbacken und einem verschwenkbaren Klemmbacken, der in seiner Schließstellung auf das Klemmende des feststehenden Klemmbackens hin und in seiner Offenstellung von diesem weggeschwenkt ist, und mit mindestens einer an der zum verschwenkbaren Klemmbacken weisenden Seite des Klemmendes des feststehenden Klemmbackens angeordneten Elektroden-Aufnahmenut, insbesondere nach einem der Ansprüche 1 bis 5, dadurch gekennzeichnet, daß die Elektroden-Aufnahmenut (23) an einem Drehstück (55) angebracht ist, das an dem feststehenden Klemmbacken (1) bezüglich einer im rechten Winkel zur Schwenkachse (13) des verschwenkbaren Klemmbackens (5) angeordneten Drehachse (56) drehbar gelagert ist, wobei vorzugsweise das Drehstück (55) in einzelnen Drehwinkelstellungen (57) der Aufnahmenut (23) gegenüber dem feststehenden Klemmbacken (1) verrastbar ist.

7. Spannzange nach Anspruch 6, dadurch gekennzeichnet daß an den einander zugewandten Seiten des Drehstückes (55) und des Klemmendes (11) des feststehenden Klemmbackens (1) komplementär zueinander ausgebildete Rastvertiefungen und Rasterhebungen drehfest angeordnet sind, die federbelastet gegeneinander vorgespannt sind.

8. Spannzange nach Anspruch 6 oder 7, dadurch gekennzeichnet, daß an der zum feststehenden Klemmbacken (1) weisenden Stirnseite des Drehstückes (55) eine mit radial in bezug zur Drehachse (56) des Drehstücks (55) ausgerichteten Zahnflanken (59) versehene Oberflächenverzahnung (62) verdrehfest angeordnet ist, die in eine verdrehfest an dem feststehenden Klemmbacken (1) angeordnete, zum Drehstück - (55) weisende, komplementäre Oberflächenverzahnung (62') eingreift, welche beiden Oberflächenverzahnungen (62, 62') federbelastet gegeneinander vorgespannt sind.

9. Spannzange nach Anspruch 7 oder 8, dadurch gekennzeichnet, daß das Drehstück (55) einen koaxial zu seiner Drehachse (56) angeordneten Drehzapfen (63) besitzt, der in einer komplementären, den feststehenden Klemmbacken (1) durchquerenden Ausnehmung (64) verdrehbar gelagert ist, und der von der dem verschwenkbaren Klemmbacken (5) abgewandten Seite des feststehenden Klemmbackens (1) her gegenüber diesem unter Zwischenfügung einer Druckfeder (69) verdrehbar festgelegt ist.

10. Spannzange nach einem der Ansprüche 1 bis 9, dadurch gekennzeichnet, daß an der zu ran dem feststehenden Klemmbacken angeordneten Elektroden-Aufnahmenut (23) weisenden Seite des Klemmendes (10) des verschwenkbaren Klemmbackens (5) ein in Richtung zu der Aufnahmenut - (23) hin vorstehendes Klemmstück (28) angeordnet ist, das in der Schließstellung des vertstellbaren Klemmbackens (5) mindestens teilweise in die Aufnahmenut (23) eintaucht.

11. Spannzange nach Anspruch 10, dadurch gekennzeichnet, daß der verschwenkbare Klemmbacken (5) zwischen seinem Klemmende (10) und seinem Befestigungsende (6) abgekröpft ist und das Klemmende (10) mit größerem Abstand zum feststehenden Klemmbacken (1) angeordnet ist als das Befestigungsende, wobei das Druckstück (33) zwischen der Abkröpfstelle (17) und dem Befestigungsende (6) angeordnet ist und wobei das Klemmende (10) des verschwenkbaren Klemmbackens - (5) in Seitenansicht gesehen vorzugsweise in etwa parallel zum Klemmende (11) des feststehenden Klemmbackens (1) angeordnet ist.

12. Spannzange nach Anspruch 11, dadurch gekennzeichnet, daß der verschwenkbare Klemmbacken (5) im Bereich zwischen der Abkröpfstelle - (17) und dem Befestigungsende (6) parallel und im Abstand zum feststehenden Klemmbacken (1) angeordnet ist.

13. Spannzange nach einem der Ansprüche 3 bis 12, gekennzeichnet durch einen den Verschwenkweg des Druckstücks (33) bzw. des Schwenkhebels (42) um die Lagerachse (38) begrenzenden Anschlag und insbesondere durch eine die beiden Klemmbacken (1, 5) mindestens teilweise überdeckende Isolierabdeckung (50), die in der wirksamen Stellung des Druckstücks (33) einen Anschlag für den zum Befestigungsende (6) hin verschwenkten Schwenkhebel (42) bildet.

14. Spannzange nach einem der Ansprüche 10 bis 13, dadurch gekennzeichnet, daß die dem feststehenden Klemmbacken (1) zugewandte Stirnseite (32) des Klemmstücks (28) eine aufgerauhte Oberfläche besitzt.

Fig. 1

Fig. 2

Fig. 3